# EUROPEAN PATENT APPLICATION

(11) **EP 2 080 952 A1**
(43) Date of publication of application: **22.07.2009**
(21) Application number: 08305006.2
(22) Date of filing: 17.01.2008
(51) Int. Cl.: F23C 7/00, F23C 9/08, F23L 7/00

(54) **Burner and method for alternately implementing an oxycombustion and an air combustion**

(71) Applicant: L'AIR LIQUIDE, Société Anonyme pour l'Etude et l'Exploitation des Procédés Georges Claude, 75007 Paris (FR)
(72) Inventor: Sanchez-Molinero, Ivan, 78000, Versailles (FR); Laurent, Jacky, 78210, St Cyr l'école (FR); Mulon, Jacques, 91300, Massy (FR); Paubel, Xavier, 92290, Chatenay Malabry (FR); Recourt, Patrick Jean-Marie, 91460, Marcoussis (FR); Tsiava, Remi Pierre, 91250, St Germain les Corbeil (FR)
(74) Representative: Conan, Philippe Claude

(57) **Abstract**

The invention relates to a method of combustion of a fuel using an oxidizer and at least one mainly inert gas, in which:
- the fuel and the oxidizer are injected in such a way as to create a flame,
- the mainly inert gas is injected in such a way that:
- at least part of the mainly inert gas is contiguous to and surrounds the flame created by the fuel and the oxidizer and has a divergent swirl with regard to the flame.

## Description

The present invention relates to a burner and a combustion method which can make use alternately of a high-oxygen-content gas or of air as oxidizer.

With the increasingly stringent environmental restrictions, particularly in terms of the production of CO₂ and NOₓ, the combustion of a fuel using oxygen or a high-oxygen-content gas is becoming increasingly attractive for the combustion of fossil fuels. However, the conventional combustion devices using air as oxidizer do not always have the geometry, nor the requisite materials, for operating with oxygen or a high-oxygen-content gas. This is because the absence of the nitrogen ballast in high-oxygen or all-oxygen combustion significantly modifies the heat transfer modes, the species concentrations, and the pressure conditions in the combustion chamber.

In order to operate with all-oxygen combustion in these installations, one proposed solution is to reinject flue gas produced by the said combustion or another combustion to partly make up for the absence of nitrogen. This procedure serves to avoid a high production of NOₓ due both to the absence of nitrogen, and also to a lower flame temperature than in all-oxygen combustion. However, the reinjected flue gas often nullifies the benefits of oxycombustion, such as, in particular, the lower proportion of unburnts from heavy oil residues, or the decrease of part of the ash, these unburnts and this ash then causing complications in the downstream flue gas treatment method.

This flue gas injection can be made essentially in two ways. First, by mixing the said flue gas with oxygen before its introduction into the burner, so as to reconstitute an oxidizer comprising about 21 to 27% oxygen and the remainder essentially consisting of CO₂ instead of nitrogen. One advantage that can be found for this solution in the case of a conversion of an air boiler is the possibility of retaining the air burners with minor operating adjustments. On the contrary, the premixing of the flue gases with the oxygen before their introduction into the burner may give rise to safety problems. To avoid this problem, in a second alternative, the flue gas can also be injected separately, either at a location of the combustion chamber, or through the burner. In the latter case, the flue gas is injected at a velocity such as to lengthen the flame, which may overheat the elements of the combustion chamber (opposite wall or tubes, in the case of a boiler). To avoid this problem, the flue gas injection velocities must be low, which has the effect of increasing the size of the burner and of creating layout problems, whereas it is well known that the surface areas of the combustion chamber must be maximized.

The preceding problems therefore imply the need to improve the methods and the oxycombustion burners making use of flue gas recycling.

Furthermore, practice demonstrates the utility of being able to use the combustion burners in flexible mode, that is, alternately in oxycombustion and in air combustion. In fact, owing to the restrictions in oxygen availability and/or safety problems, it may be useful to be able to convert an oxycombustion into air combustion without replacing the burner. Similarly, for certain types of combustion, it is preferable to start the combustion with air and then switch to oxycombustion for safety reasons.

It is therefore the object of the present invention to propose a device suitable for implementing an oxycombustion with flue gas recycle in a device designed for an air combustion.

A further object of the present invention is to propose a combustion device suitable for alternately implementing an oxycombustion with flue gas recycle or an air combustion.

A further object of the present invention is to propose a combustion device sutiable for alternately implementing an oxycombustion with flue gas recycle or an air combustion, the said combustions producing a flame having a controlled size.

For this purpose, the invention relates to a method of combustion of at least one fuel using at least one oxidizer and at least one mainly inert gas, in which:
- the fuel and the oxidizer are injected in such a way as to create a flame,
- the mainly inert gas is injected in such a way that:
   - at least part of the mainly inert gas is contiguous to and surrounds the flame created by the fuel and the oxidizer and has a divergent swirl with regard to the flame.

Optionally, all of the injected mainly inert gas is injected in such a way that it is contiguous to and surrounds the flame created by the fuel and the oxidizer and has a divergent swirl with regard to the flame. This invention further relates to a method of combustion of at least one fuel using at least one oxidizer and at least one mainly inert gas in which:
- the mainly inert gas is injected in the form of two jets, in such a way that:
   - the first jet of mainly inert gas surrounds and is contiguous to the flame created by the fuel and the oxidizer and has a divergent swirl with regard to the said flame,
   - the second jet of mainly inert gas surrounds the first jet of mainly inert gas and the said second jet has a convergent swirl with regard to the flame created by the fuel and the oxidizer

Alternatively, when only part of the mainly inert gas is injected in such a way that it is contiguous to and surrounds the flame created by the fuel and the oxidizer and has a divergent swirl with regard to the flame, the remainder of the mainly inert gas is not injected in such a way that the second jet of mainly inert gas surrounds the first jet of mainly inert gas and the said second jet has a convergent swirl with regard to the flame created by the fuel and the oxidizer. The invention further relates to a burner suitable for implementing the said method and comprising:
- at least one means (1) for injecting fuel and at least one means for injecting oxidizer, the said means being placed with regard to one another in such a way that the oxidizer and the fuel are capable of producing a flame,
- a means for injecting a mainly inert gas:
   - said means for injecting the mainly inert gas being suitable for injecting at least part of the mainly inert gas in the form of a jet contiguous to and surrounding the flame produced by the oxidizer and the fuel, said means for injecting at least part of the mainly inert gas comprising a means (5) suitable for divergently swirling the flow of mainly inert gas passing through it.

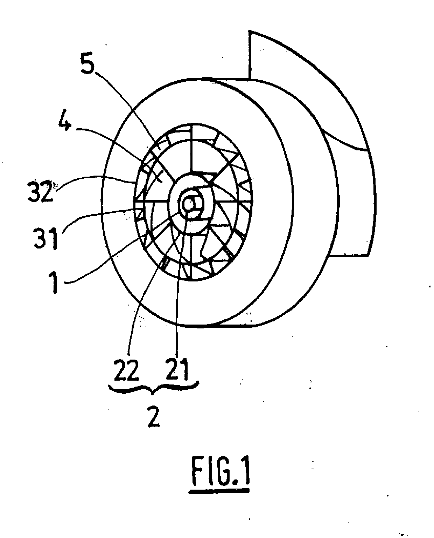

Other features and advantages of the invention will appear from a reading of the description that follows. Embodiments of the invention are provided as non-limiting examples, illustrated by the Figure 1 which is a schematic view of a burner according to the invention.

The invention therefore relates to a method of combustion of at least one fuel using at least one oxidizer and at least one mainly inert gas, in which:
- the fuel and the oxidizer are injected in such a way as to create a flame,
- the mainly inert gas is injected in such a way that:
   - at least part of the mainly inert gas is contiguous to and surrounds the flame created by the fuel and the oxidizer and has a divergent swirl with regard to the flame.

The method according to the invention implements the main combustion of a fuel by an oxidizer. The fuel may be any gaseous, liquid, solid, slurry, emulsion, or any combination thereof. If it is a gas, the fuel may be, but is not limited to, natural gas, mine gas, coke oven gas, blast furnace gas, refinery gas, low heating value gas, gassified solid fueld, or syngas. If it is a liquid, the fuel may be, but is not limited to, home-heating oil, heavy fuel oil, asphalt, refinery residue or crude oil. If it is a solid, the fuel may be, but is not limited to, coal, coke, petroleum coke, biomass, peat, solid asphalt, or solid refinery residue. These various types of fuels are injected in such a way as to form a flame with the oxidizer. The injections of the fuel or fuels and the oxidizer can be made in any manner known to a person skilled in the art in order to produce a flame. According to the method of the invention, a mainly inert gas is also injected. In the context of the present invention, "mainly inert gas" means a gas or a gas mixture of which the molar composition comprises at least 50% oxygen. In general, the mainly inert gas comprises at least one of the following compounds: CO₂, N₂, H₂O, Ar, preferably in a molar quantity of at least 50%. The type of mainly inert gas may be identical or different to that of the oxidizer according to whether the operating mode of the method is with air combustion or with oxycombustion. The mainly inert gas may be or comprise a flue gas.

The mainly inert gas is preferably injected in the form of a single jet. This single jet surrounds the flame created by the fuel and the oxidizer. In the context of the present invention, "surround" means the fact that this jet of mainly inert gas encircles the central flame of the fuel and the oxidizer. According to a preferred embodiment, the jet of mainly inert gas has the shape of a ring centred on the flame of fuel and oxidizer.

The mainly inert gas may optionally be injected in the form of two jets. In this operating scenario, the first jet surrounds the flame created by the fuel and the oxidizer, and the second jet surrounds the said first jet of mainly inert gas. In consequence, the second jet also surrounds the flame created by the fuel and the oxidizer, but is located at a greater distance from the flame than the second jet of mainly inert gas; in the application, mention is made of the first jet of mainly inert gas as the inner peripheral jet, and mention is made of the second jet of mainly inert gas as the outer peripheral jet. In the context of the present invention, "surround" means the fact that these jets of mainly inert gas encircle the central flame of the fuel and the oxidizer. According to a preferred embodiment, the jets of mainly inert gas have the shape of rings centred on the flame of fuel and oxidizer.

According to the invention, the single peripheral jet has a divergent swirl with regard to the flame of fuel and oxidizer. In the context of the present invention, swirl of a jet means a swirl movement of the jet about itself. The single peripheral jet is therefore a jet swirling about itself. Since the said jet surrounds the flame of fuel and oxidizer, the said single peripheral jet is also swirling about the said flame. According to the invention, this swirl is divergent, that is, in the single peripheral jet, the mainly inert gas moves away from the flame of fuel and oxidizer as it is injected.

In another embodiment according to the invention, the inner peripheral jet may have a divergent swirl with regard to the flame of fuel and oxidizer. In the context of the present invention, swirl of a jet means a swirl movement of the jet about itself. The inner peripheral jet is therefore a jet swirling about itself. Since the said jet surrounds the flame of fuel and oxidizer, the said inner peripheral jet is also swirling about the said flame. According to the invention, this swirl is divergent, that is, in the inner peripheral jet, the mainly inert gas moves away from the flame of fuel and oxidizer as it is injected.

According to the invention, the outer peripheral jet has a convergent swirl with regard to the flame of fuel and oxidizer. Like the inner peripheral jet, the outer peripheral jet is also swirling about the said flame. According to the invention, this swirl is convergent, that is, in the outer peripheral jet, the mainly inert gas moves away from the flame of fuel and oxidizer as it is injected.

Whether for the single peripheral jet, the inner peripheral jet or the outer peripheral jet, the swirl rate of each of these jets of mainly inert gas is advantageously between 0.26 and 1.73. The swirl rate S is defined as follows: S = It/la, where It and la are respectively the tangential and axial pulses of the fluid swirled in a jet.

The method according to the invention serves to control the length of the flame by modifying the ratio of the flow rate of the peripheral jet to the flow rate of the single or inner jet. The method is particularly suited for use in boilers.

The method according to the invention can be implemented both for an oxycombustion method and for an air combustion method. According to a first embodiment of the method, it concerns an oxycombustion, which means that one of the two oxidizers is an oxygen-containing gas. In the context of the present invention, oxygen-containing gas means a gas having an oxygen concentration above 80%, preferably above 90%. According to this first embodiment, the oxidizer is an oxygen-containing gas and the mainly inert gas is composed of the flue gases from a combustion. The flue gases from a combustion generally comprise mainly, if not exclusively, CO₂. These gases may also comprise H₂O. Preferably, the mainly inert gas consists at least partly of the gases issuing from the combustion of the present method and which are recycled during the combustion method. In this case, the flue gases are recycled outside the combustion chamber in which the present method is implemented. They may be treated before being recycled. In general, at least 4 Sm³ of flue gases are recycled during the method according to the invention. According to this first embodiment, it is preferable for the flow rate of mainly inert gas injected into the single peripheral jet of mainly inert gas to account for 100% of the total flow rate of mainly inert gas injected. Furthermore, the gases issuing from a combustion injected in the form of the single peripheral jet does not disturb the flame issuing from the combustion of the fuel and of the oxygen-containing gas, but creates a corridor close to the nose of the burner which protects the walls of the combustion chamber from excessively intense radiation. Beyond the burner nose, the gases issuing from a combustion and injected in the form of the single peripheral jet and the hot gases issuing from the actual combustion of the method, are mixed to form only one uniform mixture. According to a first embodiment, gases issuing from a combustion may also be injected into at least one point of the combustion chamber that is different from the injection points of the single peripheral jet.

According to a second embodiment of the method, the method is an air combustion method, which means that the two oxidizers are air (or none of the oxidizers is an oxygen-containing gas). According to this second embodiment, the oxidizer is air and the mainly inert gas is also air. Preferably, the flow rate of air injected as oxidizer accounts for 5 to 30% of the total flow rate of air injected into the method. It is also preferable for the flow rate of air injected into the single peripheral jet of mainly inert gas to account for 4 to 25% of the total flow rate of air injected into the method. Preferably, the total flow rate of air injected into the method may correspond to the quantity of air necessary for the combustion of the fuel. This distribution of the air flow rate in the single peripheral jet serves to make the air converge towards the fuel in such a way as to connect the flame to the burner nose and to shorten it so as to prevent the overheating of the walls of the combustion chamber.

According to a **third embodiment** of the method, the oxidizer is an oxygen-containing gas and the mainly inert gas is air. This third embodiment is particularly used for the startup of the combustion method.

The invention also relates to a burner comprising:
- at least one means (1) for injecting fuel and at least one means for injecting oxidizer, the said means being placed with regard to one another in such a way that the oxidizer and the fuel are capable of producing a flame,
- a means for injecting a mainly inert gas:
   - said means for injecting the mainly inert gas being suitable for injecting at least part of the mainly inert gas in the form of a jet contiguous to and surrounding the flame produced by the oxidizer and the fuel, said means for injecting at least part of the mainly inert gas comprising a means (5) suitable for divergently swirling the flow of mainly inert gas passing through it.

The burner according to the invention therefore comprises a first central part comprising at least one means for injecting fuel and at least one means for injecting oxidizer. These two injection means must be positioned with regard to one another in such a way that the oxidizer and fuel are capable of producing a flame when the burner operates. Thus the means for injecting fuel and oxidizer may be coaxial tubes or separate tubes. Any known technique for injecting fuel and oxidizer in order to form a flame can be used.

The burner comprises a second peripheral part consisting of a means for injecting mainly inert gas. Preferably, the means suitable for divergently swirling the flows of mainly inert gas passing through the injection means causes the said flow to swirl with a swirl rate of between 0.26 and 1.73. The said means suitable for divergent swirling is generally a deflector.

According to a particular embodiment, the burner is such that:
- the means for injecting mainly inert gas comprises two coaxial tubes centred around the means for injecting fuel and the means for injecting oxidizer, the space between the two tubes allowing the passage of part of the mainly inert gas and comprising the means suitable for divergently swirling the flow of mainly inert gas passing through it.

According to this particular embodiment, the burner may also comprise two means for injecting oxidizer, the said means being coaxial tubes, and the means for injecting fuel may be a metal ring drilled with at least one ring of orifices, the said metal ring being coaxial with the oxidizer injection tubes and placed between the said tubes. The burner is then composed of four coaxial tubes and the metal ring drilled with orifices arranged in a ring, the said ring being placed between the smallest tube and the tube having the immediately larger diameter.

According to the invention, the burner may comprise two distinct means for injecting fuel for the injection of two different fuels.

The invention also relates to a method for converting an air-fuel burner comprising at least one means for injecting fuel and at least one means for injecting air, the said means being positioned with regard to one another in such a way that the air and the first fuel are capable of producing a flame, into an oxygen-fuel burner. The said conversion method consists in supplementing the said burner by means for injecting oxidizer:
- the means for injecting oxidizer being suitable for injecting part of the oxidizer in the form of a jet surrounding the air-fuel burner, and the said first means for injecting oxidizer comprising a means suitable for divergently swirling the flow of oxidizer passing through it.

It is thereby possible to convert an air-fuel burner into an oxygen-fuel burner for the combustion of the same fuel with an oxygen-containing gas. The conversion consists in adding to the air-fuel burner a means for injecting oxidizer. This injection means must be positioned in such a way as to permit the injection of a jet of oxidizer in a form surrounding the air-fuel burner. Furthermore, this injection means must be equipped with means for actuating them with a swirl movement: having a divergent swirl.

The invention also relates to a method for converting a method of air combustion of a fuel in which the fuel and the air are injected in such a way as to create a flame, into an oxycombustion method, in which:
- the air is replaced by an oxygen-containing gas, and
- gases issuing from a combustion are injected in the form of a jet, in such a way that:
   - the jet surrounds the flame created by the fuel and the oxygen-containing gas and the said first jet has a divergent swirl with regard to the said flame.

It is thereby possible to convert an air combustion method implementing an air/fuel combustion into an oxycombustion method implementing a combustion of the same fuel with an oxygen-containing gas. The conversion consists in replacing the air by an oxygen-containing gas in the initial method and in injecting the gases issuing from a combustion in addition to the said oxycombustion. The gases issuing from a combustion may be the gases issuing from the oxycombustion, which have been recycled, or may issue from another combustion. These gases issuing from a combustion must be introduced into the oxycombustion method in the form of a jet surrounding the flame created by the fuel and the oxygen-containing gas. Furthermore, the jet, which is close to the oxygen-fuel flame, must have a divergent swirl effect with regard to the flame created by the.

Figure 1 shows the end of a burner according to the invention. It comprises a first central part consisting of:
- fuel injection means 1 which is a tube,
- oxidizer injection means 2 which comprises two tubes 21 and 22: one 21 is placed at the centre of the fuel injection tube 1 and the other 22 around the same fuel injection tube 1.

The burner also comprises a second part which is a means for injecting mainly inert gas; it comprises three coaxial tubes 22, 31, 32 centred on the first central part, the smallest tube corresponding to the tube 22 for injecting fuel 1. The space between the intermediate tube 31 and the smallest tube 22 comprises means 5 (fins) suitable for divergently swirling the flow of mainly inert gas passing through it. This is either the single peripheral jet, or the first jet in the two jet system. The space between the optional largest tube 32 and the intermediate tube 31 comprises means 4 (fins) suitable for convergently swirling the flow of mainly inert gas passing through it. This is the second jet in the two jet system. This space is not present in the single peripheral jet system, and in this system the intermediate tube 31 would be the largest tube.

One advantage of the invention is that it serves to modify a burner normally operating with air in such a way that it operates with an oxygen-containing gas and oxygen-containing flue gases. It suffices to supplement the air burner corresponding to the first part of the burner according to the invention with the second part of the burner according to the invention suitable for injecting the recycled flue gases. The oxygen-containing gas is then injected into the first part of the burner and the flue gases are injected into the second part.

One advantage of the burner according to the invention is that it can operate with air exclusively as oxidizer while preserving the flow of fuel used for oxycombustion. This all-air operating necessity may be required for continuing production in situations in which the oxygen supply to the burner is interrupted.

One advantage of the burner and of the combustion method according to the invention is that they produce a flame having a controlled size, which is useful in confined vessels, such as boiler combustion chambers in which the direct contact of the excessively long flame with bare steel tubes is fatal. In this latter case, the geometry of the flame produced by the burner according to the invention allows a uniform distribution of the heat flux on all the inner surfaces of the boiler; a boiler equipped with this burner operating in oxycombustion can withstand an energy density of up to 0.600 MW/m³ depending on the proportion of flue gas recycled.

A further advantage of the burner and of the combustion method according to the invention operating with an oxygen-containing gas is that they produce a flame having a high core temperature, whereby the unburnts are significantly decreased.

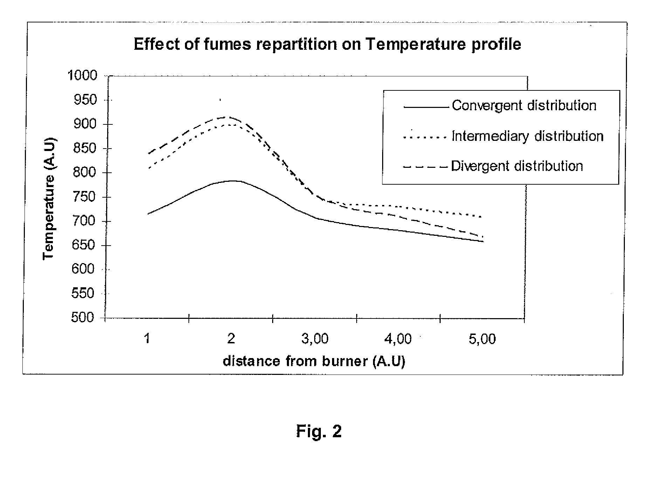

This invention may comprise one or more of the following features :
The temperature profile of the flame is controlled by varying the flow distribution of mainly inert gas between the first jet and the second jet. The varying of the distribution of the mainly inert gas through the first jet and the second jet allows the shape of the flame and the temperature profile in the combustion chamber to be regulated as shown on figure 2. The indicated temperatures are measurement in gas phase near the crown of the combustion chamber. The greater the flowrate through the convergent jets (i.e. the second jet in the two jet system), the cooler the resulting overall temperature profile. The greater the flowrate through the divergent jets (i.e. the single peripheral jet or the first jet in the two jet system), the hotter the resulting overall temperature profile. It is therefore possible to obtain a generally intermediate overall temperature profile by varying the distribution between the convergant and the divergent jets.
The fuel may be gaseous, liquid, solid, a slurry, an emulsion, solid in gas suspension, or any combination of the above. Three or more different fuels may be simultaneously injected. The fuel is injected through two or more orifices and the oxidizer is injected through two or more orifices. The oxidizer is injected through two or more orifices. The injection of the oxidizer is staged between primary and secondary oxygen. A single set of orifices may be utilized to inject two or more different fuels. The flue gas temperature is maintained at a temperature greater than the acid dew point temperaure.
The pressure drop that either the fuel stream, oxidizer stream, or both, experiences upon passing through the burner may be no more than 200 mbar. The pressure drop that the mainly inert gas experiences when passing through the burner may be between 4 mbar and 10 mbar. The mainly inert gas injection means may be fabricated from HR 160, or another Hastelloy-type allow, if the fuel has a high sulphur content. The mainly inert gas injection means may be fabricated from 316 stainless steel if the fuel is relativel sulphur free. The means for injecting oxidant and fuel may be fabricated from inconel 600. A boiler my comprise at least one burner in accordance with this design.
The oxidizer is an oxygen-containing gas and the mainly inert gas is composed of the gases issuing from a combustion of said method and recyled, wherein the **rate of recycling** varies from 0.1 to 5.0, preferably 1.5. In this document, the rate of recycling is defined as the ratio (x/y) of the volume flowrate of the flue gas that is recycled (x) to the volume flowrate of the flue gas that exists the system through the stack (y).

## Claims

1. Method of combustion of at least one fuel using at least one oxidizer and at least one mainly inert gas, in which:
- the fuel and the oxidizer are injected in such a way as to create a flame,
- the mainly inert gas is injected in such a way that:
- at least part of the mainly inert gas is contiguous to and surrounds the flame created by the fuel and the oxidizer and has a divergent swirl with regard to the flame.

2. The method of claim 1, **characterized in that,**
- the mainly inert gas is injected in the form of two jets, in such a way that:
- the first jet of mainly inert gas surrounds and is contiguous to the flame created by the fuel and the oxidizer and has a divergent swirl with regard to the said flame,
- the second jet of mainly inert gas surrounds the first jet of mainly inert gas and the said second jet has a convergent swirl with regard to the flame created by the fuel and the oxidizer.

3. Method according to claim 2, **characterized in that** the temperature profile of the flame is controlled by varying the flow distribution of mainly inert gas between the first jet and the second jet.

4. Method according to one of the preceding claims, **characterized in that** the fuel may be gaseous, liquid, solid, a slurry, an emulsion, solid in gas suspension, or any combination of the above.

5. Method according to one of the receding claims, **characterized in that** 3 or more different fuels may be simultaneously injected.

6. Method according to one of the preceding claims, **characterized in that** the fuel is injected through two or more orifices and the oxidizer is injected through two or more orifices.

7. Method according to one of the preceding claims, **characterized in that** the oxidizer is injected through two or more orifices.

8. Method according to one of the preceding claims, **characterized in that** the injection of the oxidizer is staged between primary and secondary oxygen.

9. Method according to one of the preceding claims, **characterized in that** a single set of orifices may be utilized to inject two or more different fuels.

10. Method according to one of the preceding claims, **characterized in that** the oxidizer is an oxygen-containing gas and the mainly inert gas is composed of the gases issuing from a combustion of said method and recyled, wherein the rate of recycling varies from 0.1 to 5.0, preferably 1.5.

11. Method according to one of the preceding claims, **characterized in that** the flue gas temperature is maintained at a temperature greater than the acid dew point temperaure.

12. Burner comprising:
- at least one means (1) for injecting fuel and at least one means for injecting oxidizer, the said means being placed with regard to one another in such a way that the oxidizer and the fuel are capable of producing a flame,
- a means for injecting a mainly inert gas:
- said means for injecting the mainly inert gas being suitable for injecting at least part of the mainly inert gas in the form of a jet contiguous to and surrounding the flame produced by the oxidizer and the fuel, said means for injecting at least part of the mainly inert gas comprising a means (5) suitable for divergently swirling the flow of mainly inert gas passing through it.

13. Boiler comprising at least one burner according to claim 12.
